Europäisches Patentamt

(19) European Patent Office

Office européen des brevets

(11) Veröffentlichungsnummer: **0 095 145**
B1

(12) **EUROPÄISCHE PATENTSCHRIFT**

(45) Veröffentlichungstag der Patentschrift:
12.03.86

(21) Anmeldenummer: 83104947.3

(22) Anmeldetag: 19.05.83

(51) Int. Cl.⁴: **B 01 J 19/02, B 01 J 2/04,**
**B 01 J 2/06, C 01 D 1/44,**
**B 05 B 1/14, B 05 B 3/02**

(54) Vorrichtung zum Zuführen und Versprühen von Ätznatronschmelze.

(30) Priorität: 25.05.82  DE 3219497

(43) Veröffentlichungstag der Anmeldung:
30.11.83 Patentblatt 83/48

(45) Bekanntmachung des Hinweises auf die Patenterteilung:
12.03.86 Patentblatt 86/11

(84) Benannte Vertragsstaaten:
AT BE CH DE FR GB IT LI NL SE

(56) Entgegenhaltungen:
DE - B - 2 451 969
FR - A - 2 174 623
GB - A - 1 122 326

RUSSIAN CHEMICAL REVIEWS, Band 40, Nr. 5, Mai
1971, Seiten 413-428, London, GB. V.D. CHEKANOVA et
al.: "Vitreous carbon (preparation, properties and
applications)"

(73) Patentinhaber: HOECHST AKTIENGESELLSCHAFT,
Postfach 80 03 20, D-6230 Frankfurt am Main 80 (DE)

(72) Erfinder: Hannesen, Kurt, An der Ziegelei 32,
D-6233 Kelkheim (Taunus) (DE)
Erfinder: Krahl, Fritz, Dr., Heimchenweg 64,
D-6230 Frankfurt am Main 80 (DE)
Erfinder: Steinrötter, Heinz, Burgstrasse 2,
D-6239 Eppstein/Taunus (DE)
Erfinder: Benninger, Siegfried, Dr., Mecklenburger
Strasse 37, D-6231 Schwalbach (DE)

## Beschreibung

Gegenstand der Erfindung ist eine Vorrichtung zum Zuführen und Versprühen von Ätznatronschmelze, die im wesentlichen aus Laugepumpe und Sprühkorb besteht.

Beim Herstellen von festem Ätznatron nach dem Prillverfahren wird Ätznatronschmelze mittels einer Laugepumpe, z. B. einer Tauchpumpe, einem Sprühkorb zugeführt, mit dem sie am Kopf eines Prillturmes in einzelne Tröpfchen aufgeteilt wird. Dabei hat sich gezeigt, dass die Vorrichtungsteile, die insbesondere mit der strömenden Ätznatronlauge und gegebenenfalls zusätzlich mit Sauerstoff in Berührung kommen, einem erheblichen Verschleiss unterliegen, obwohl sie aus Edelstahl, Nickel, Nickellegierungen, Silber oder Edelmetalllegierungen hergestellt sind.

Aus Russian Chemical Reviews, 40 (5), 1981, S. 427 ist die Verwendung von Glaskohlenstoff im Apparatebau als alternativer Werkstoff u. a. auch für Nickel bekannt.

Es bestand die Aufgabe, eine Vorrichtung zu schaffen, deren Teile, die mit Ätznatronschmelze in Berührung kommen, weitgehend gegen Verschleiss geschützt sind.

Die Aufgabe wird erfindungsgemäss dadurch gelöst, dass die Teile der Vorrichtung, die mit der Ätznatronschmelze direkt in Berührung kommen, aus Glaskohlenstoff bestehen oder mit Glaskohlenstoff beschichtet sind.

Alle Teile der Vorrichtung wie Teile von Pumpen, Blenden, Rohre, Rohrkrümmer, Armaturen, Sprühkörbe usw., die mit Ätznatronschmelze in Berührung kommen, können aus Glaskohlenstoff bestehen bzw. mit Glaskohlenstoff beschichtet werden.

Im folgenden wird die Erfindung anhand zweier Beispiele näher erläutert.

Fig. 1 zeigt einen Sprühkorb für Ätznatronschmelze.

Fig. 2 zeigt eine Tauchpumpe für Ätznatronschmelze.

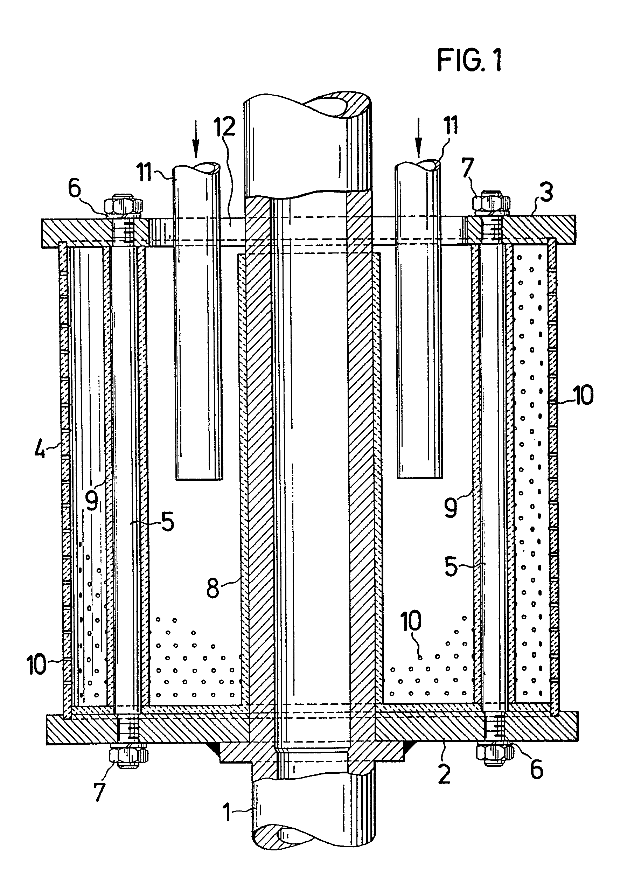

Der Sprühkorb (Fig. 1) besteht aus einer Hülse 1 zur Aufnahme der Antriebswelle (nicht dargestellt) und des Bodenteils 2. Auf dem Bodenteil 2 sitzt der Mantel 4 des Korbes aus Glaskohlenstoff mit den Löchern 10, durch die die Ätznatronschmelze zerstäubt wird. Durch eine Abdeckung, einen Ring 3, und die Anker bestehend aus Bolzen 5, Unterlegscheiben 6 und Muttern 7, wird der Mantel 4 gehalten. Das Bodenteil 2 und die Hülse 1 sind durch eine Büchse 8 und die Bolzen 5 durch Hülsen 9 aus Glaskohlenstoff geschützt. 11 sind die Zuleitungen für die Ätznatronschmelze, die durch einen Ringspalt 12 in den Sprühkorb ragen.

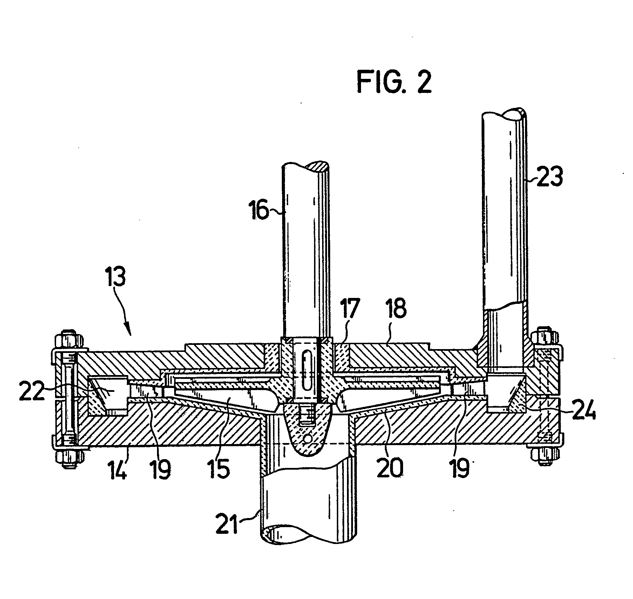

Das Pumpengehäuse der Tauchpumpe (Fig. 2) besteht aus der Leiteinrichtung 13 und dem Saugdeckel 14. Die Nabe des Laufrades 15 ragt durch die Leiteinrichtung 13, bestehend aus Pumpengehäuse 18, Büchse 17 und den Leitschaufeln 19, hindurch und nimmt die Antriebswelle auf. Die Leiteinrichtung 13 weist eine Büchse 17 zum Schutz des Pumpengehäuseteiles 18 auf. Die Büchse 17 trägt Leitschaufeln 19. Ebenso ist der Saugdeckel 14 mit einer Büchse 20 versehen, die den Deckel 14 schützt und deren Stutzen 21 als Saugrohr für die Ätznatronschmelze dient. Saugdeckel 14 und Pumpengehäuseteil 18 begrenzen einen Ringkanal 22, über den die Ätznatronschmelze einem Auslassstutzen 23 zugeführt wird. Im Ringkanal 22 ist ein Leitring 24 angeordnet.

Büchse 17 mit Leitschaufeln 19, Büchse 20 mit Stutzen 21 und Pumpenlaufrad sind aus Glaskohlenstoff gefertigt. Der Leitring 24 kann ebenfalls as Glaskohlenstoff bestehen.

## Patentansprüche

1. Vorrichtung zum Zuführen und Versprühen von Ätznatronschmelze, die im wesentlichen aus Laugepumpe und Sprühkorb besteht, dadurch gekennzeichnet, dass die Teile der Vorrichtung, die mit der Ätznatronschmelze direkt in Berührung kommen, mit Glaskohlenstoff beschichtet sind.

2. Vorrichtung zum Zuführen und Versprühen von Ätznatronschmelze, die im wesentlichen aus Laugepumpe und Sprühkorb besteht, dadurch gekennzeichnet, dass die Teile der Vorrichtung, die mit der Ätznatronschmelze direkt in Berührung kommen aus Glaskohlenstoff bestehen.

## Claims

1. A device for feeding and spraying molten caustic soda which substantially consists of lye pump and spray head, wherein those parts of the device being in direct contact with the molten caustic soda are coated with glassy carbon.

2. A device for feeding and spraying molten caustic soda which substantially consists of lye pump and spray head, wherein those parts of the device being in direct contact with the molten caustic soda consist of glassy carbon.

## Revendications

1. Dispositif pour introduire et pulvériser de la soude caustique fondue, qui se compose essentiellement d'une pompe à lessive et d'un panier de pulvérisation, caractérisé en ce que les parties du dispositif qui entrent directement en contact avec la soude caustique fondue sont revêtues de carbone vitreux.

2. Dispositif pour introduire et pulvériser de la soude caustique fondue, qui se compose essentiellement d'une pompe à lessive et d'un panier de pulvérisation, caractérisé en ce que les parties du dispositif qui entrent directement en contact avec la soude caustique fondue sont constituées de carbone vitreux.

FIG. 1

# FIG. 2